# EUROPÄISCHE PATENTANMELDUNG

(11) **EP 1 234 503 A1**
(43) Veröffentlichungstag der Anmeldung: **28.08.2002**
(21) Anmeldenummer: 01119575.7
(22) Anmeldetag: 16.08.2001
(51) Int. Cl.: A21C 7/01

(54) **Maschine und Verfahren zum Rundwirken von Teigstücken**

(30) Priorität: 14.02.2001 DE 10107406
(71) Anmelder: Schäfer, Helmut, 72070 Tübingen (DE)
(72) Erfinder: Schäfer, Helmut, 72070 Tübingen (DE)
(74) Vertreter: Ott, Elmar ,Dipl.-Ing.

(57) **Zusammenfassung**

Maschine zum Rundwirken von Teigstücken, bei der über einem Transportband (1) ein in Transportrichtung des Transportbandes ausgerichteter Wirkkanal (2) angeordnet ist, dessen zum Transportband (1) weisende Längsseite offen ist und an ihren seitlichen Rändern (17) gleitend auf dem Transportband (1) anliegt, und eine Antriebseinrichtung (3) den Wirkkanal (2) quer zur Transportrichtung des Transportbandes (1) periodisch auslenkt.

## Beschreibung

Die Erfindung betrifft eine Maschine und ein Verfahren zum Rundwirken von Teigstücken.

Nach dem Stand der Technik sind unterschiedliche Arten von Rundwirkmaschinen in Gebrauch. Der wohl häufigste Rundwirkertyp ist der so genannte Kegelrundwirker. Bei dieser Maschine wird der Teig von einem drehenden Kegel durch spiralförmig anliegende Wirkwannen getrieben und dadurch gerundet (EP 0313112 A1).

Es sind weiterhin auch Rundwirker bekannt, bei denen kegelförmige Elemente eine exzentrische Drehbewegung ausführen und die Teigstücke gegen eine stehende Gegenwand rollen.

Weiterhin sind Bänderrundwirker bekannt, bei denen zwei V-förmig angeordnete gegenläufige Bänder ein birnenförmiges Teigstück formen.

Andere Systeme arbeiten als nach oben offene Rinnen, wobei eine Seite der jeweiligen Rinne eine exzentrische Wirkbewegung ausführt (W 36073) A 6141/66).

An allen nach dem Stand der Technik bekannten Maschinen müssen die Probleme, die sich bei weichen und klebrigen Teigen ergeben durch Zusatzstoffe, wie Öl oder Spezialmehl (Kartoffelmehl oder Reismehl), behoben werden. Diese Zusatzstoffe behindern die Weiterverarbeitung und wirken sich teilweise negativ auf die Qualität des Endproduktes aus. Weiterhin benötigen alle Maschinen sehr lange Wirkwege und erfordern somit einen entsprechend großen Platzbedarf.

Der Erfindung liegt die Aufgabe zugrunde, eine Maschine zum Rundwirken von Teigstücken zu schaffen, die einen möglichst einfachen Aufbau hat und gleichmäßig rundgewirkte Teigstücke ergibt.

Die Lösung dieser Aufgabe erhält man durch die im Anspruch 1 angegebenen Merkmale. Über einem Transportband ist ein in Laufrichtung des Transportbandes ausgerichteter Wirkkanal angeordnet, der eine zum Transportband hin offene Rinne mit U-förmigem oder auch anders geformtem Querschnitt bildet. Zum Rundwirken eines Teigstücks wird dieses vom Transportband durch den Wirkkanal befördert, während der Wirkkanal eine seitliche und vorzugsweise kreisförmige Pendelbewegung ausführt. Der Wirkkanal bleibt dabei ständig in Längsrichtung des Transportbandes ausgerichtet. Durch die seitliche Pendelbewegung des Wirkkanals gelangt das Teigstück einmal an die linke Seitenwand und einmal an die rechte Seitenwand des Wirkkanals und wird dabei so in Kreisbewegungen versetzt, dass ein optimal rundgeformtes Teigstück entsteht. Vorzugsweise sind die Innenwandungen des Wirkkanals mit einer teigabweisenden Antihaftbeschichtung ausgerüstet, so dass auch sehr weiche und klebrige Teige rundgewirkt werden können.

Die seitliche Pendelbewegung des Wirkkanals kann besonders einfach mittels eines Exzenterantriebs erfolgen, der von oben am Wirkkanal angreift. Werden dabei zwei Exzenterantriebe verwendet, die winkelsynchron arbeiten, so wird dadurch die exakte Längsausrichtung des Wirkkanals bezogen auf die Transportrichtung des Transportbandes sichergestellt.

Das Transportband ist für die Verwendung von weichen und klebrigen Teigen mit einer möglichst glatten Oberfläche ausgerüstet, damit Teigabstreifer, die an den Seitenrändern des Wirkkanals angeordnet sind, anhaftenden Teig von der Oberfläche des Transportbandes abstreifen können. Dadurch wird erreicht, dass auch klebrige Teige nicht am Transportband haften bleiben, sondern dass auch ein klebriges Teigstück im ganzen rundgewirkt und durch den Wirkkanal hindurchgeführt werden kann. Die Innenflächen des Wirkkanals sind für klebrige Teige beispielsweise teflonbeschichtet oder mit Teflonfolien oder Teflonstreifen überzogen. Innen an den Seitenrändern des Wirkkanals angebrachte Teflonstreifen können mit ihrem unteren Rand leicht nach innen gebogen auf dem Transportband gleitend aufliegen, wodurch ein optimaler Abstreifeffekt an der Oberfläche des Transportbandes erzielt wird.

Anstelle von Teflonfolien oder Teflonstreifen können auch andere teigabweisenden Materialien für die Auskleidung der Innenflächen des Wirkkanals Verwendung finden.

Um eine vollständige Teigabstreifung im Bereich unterhalb des Wirkkanals an der Oberfläche des Transportbandes zu erhalten, muss der Pendelhub des Wirkkanals so groß sein, dass die gesamte mit Teig beaufschlagte Oberfläche des Transportbandes von den Seitenrändern und den daran angebrachten Teigabstreifem überstrichen wird.

Versuche haben gezeigt, dass mit einem Wirkkanal, der eine trichterförmige Öffnung für die Teigzufuhr hat, sehr gute Rundwirkergebnisse erzielt werden. Durch den trichterförmigen Teigeinlass gelangt das jeweils zugeführte Teigstück zu einer verjüngten Stelle des Wirkkanals, von wo aus sich der Wirkkanal zur Auslassöffnung hin wieder geringfügig aufweiten kann. Der im Versuch verwendete Wirkkanal hatte einen U-förmigen Querschnitt, so dass sich in Kombination mit den leicht nach innen gebogenen Teigabstreifern eine C-förmige teigabweisende Innenwandung für den Wirkkanal ergibt.

Grundsätzlich besteht auch die Möglichkeit, Wirkkanäle mit anderen Querschnittsformen auszubilden, sofern dies zur Erzielung entsprechend rundgeformter Teilstücke als geeignet angesehen wird.

Eine besonders kompakte Bauweise erhält man dadurch, dass die Maschine zum Rundwirken mit einer Teig- Abwiegeeinrichtung kombiniert wird, indem man deren Auslaufband als Transportband für die Maschine zum Rundwirken mitbenutzt.

Der Erfindung liegt weiterhin die Aufgabe zugrunde, ein Verfahren zum Rundwirken von Teigstücken anzugeben, welches maschinell auf möglichst einfache Weise durchführbar ist.

Die Lösung dieser Aufgabe wird mit den Merkmalen des Anspruchs 13 erhalten. Zum Rundwirken werden die Teigstücke zunächst auf ein Transportband abgelegt, mit dem sie einer Wirkeinrichtung zugeführt werden. Mit der Wirkeinrichtung wird der Transportbewegung des Transportbandes und damit der Linearbewegung des auf dem Transportband abgelegten Teigstückes eine Schwenk- oder Kreisbewegung überlagert, die auf das Teigstück einwirkt. Durch die auf das Teigstück einwirkenden Bewegungen - Linearbewegung und Kreisbewegung bzw. Schwenkbewegung - erhält man ein rundgewirktes Teigstück, wie es für die Weiterverarbeitung benötigt wird.

Zur Verarbeitung klebriger Teige mit Roggenanteilen und hohem Wasseranteil kann zusätzlich eine Walze auf dem Transportband über einen Gelenkarm um eine Gelenkachse verschwenkbar aufliegen, wobei ein Dosierventil dosiert Öltropfen in einer einstellbaren Meng auf die Walze aufbringt. Beim Einsatz in der Praxis hat sich gezeigt, dass mit diesem System selbst derart klebrige Teige maschinell rundgewirkt werden können, bei denen dies bisher nicht möglich war.

Die Erfindung wird nachfolgend anhand eines in der Zeichnung dargestellten Ausführungsbeispiels näher erläutert.

Es zeigen:
Figur 1 eine perspektivische Ansicht der Maschine im Bereich des Transportbandes und einem darüber angeordneten Wirkkanal und
Figur 2 den Querschnitt gemäß der Schnittlinie AB von Figur 1 durch den Wirkkanal und das Transportband,
Figur 3 und 4 eine Beölungseinrichtung für klebrige Teige, die den Rundformeinrichtungen der Maschine von Figur 1 auf deren Transportband vorgeschaltet ist.

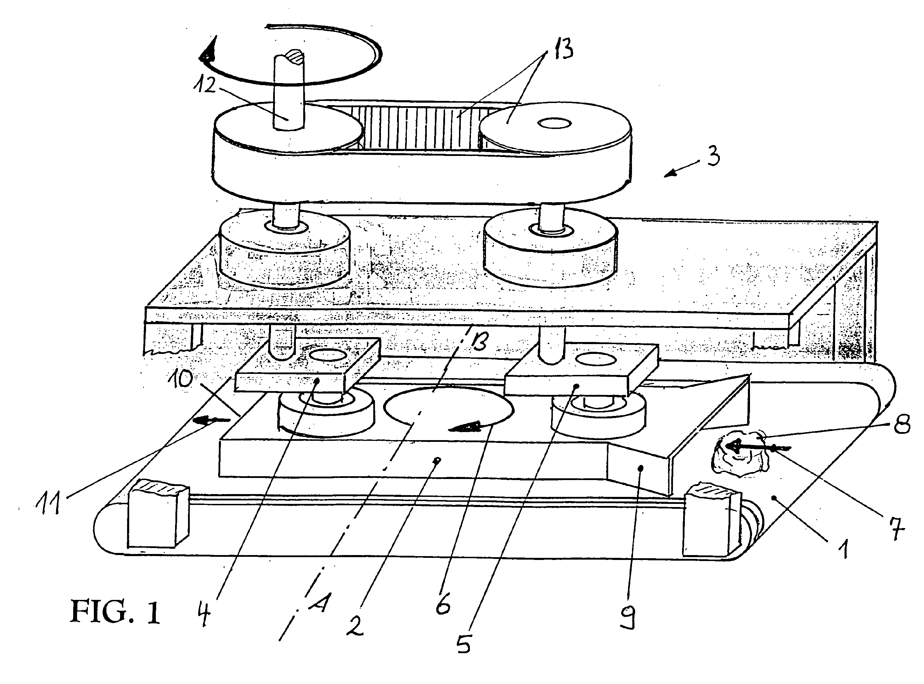

Die in Figur 1 dargestellte Maschine zum Rundformen von Teigstücken besteht im Wesentlichen aus einem Transportband 1, einem Wirkkanal 2 und einer Antriebseinrichtung 3, die den Wirkkanal 2 über Exzenterantriebe 4, 5 kreisförmig gemäß Pfeilrichtung 6 bewegt. Das Transportband 1 hat die Transportrichtung 7, so dass ein auf dem Transportband 1 abgelegtes Teigstück 8 zunächst in einen Fangtrichter 9 des Wirkkanals 2 gelangt, wo es während des Längstransports durch die überlagerte Kreisbewegung des Wirkkanals 2 zu einem runden Teigstück rundgewirkt wird. Am hinteren Ende 10 des Wirkkanals 2 tritt das rundgewirkte Teigstück dann gemäß Pfeilrichtung 11 aus dem Wirkkanal 2 aus.

Die Antriebseinrichtung 3 besitzt eine von einem hier nicht dargestellten Motor angetriebene Antriebswelle 12, die über einen Zahnriemenantrieb 13 die beiden Exzenterantriebe 4, 5 und damit auch den Wirkkanal 2 in eine Kreisbewegung versetzt.

Mit der Maschine gemäß Figur 1 erhält man ein rundgeformtes Teigstück, welches beim Wirkvorgang abwechselnd mit der linken und mit der rechten Seite des Wirkkanals 2 in Berührung kommt, so dass unterschiedlich gerichtete Schubkräfte auf das Teigstück einwirken.

Die Rollbewegung, die durch die Transportrichtung des Transportbandes 1 vorgegeben ist, versucht ein zylinderförmiges Teigstück zu formen. Die gleichzeitige Drehbewegung des Teigstückes durch den Wirkkanal 2 bewirkt, dass jeweils die gegen die Transportrichtung stehende Seite des Teigstückes nach unten gezogen wird. Durch die schrittweise Drehung wird somit ein Rundstück mit einer Außenspannung nach unten, dem so genannten Schluss, erzeugt.

Das fertig rundgeformte Teilstück hat diesen so genannten Schluss immer auf der Unterseite des Teigstückes, also in einer definierten Lage, die eine maschinelle Weiterverarbeitung erleichtert.

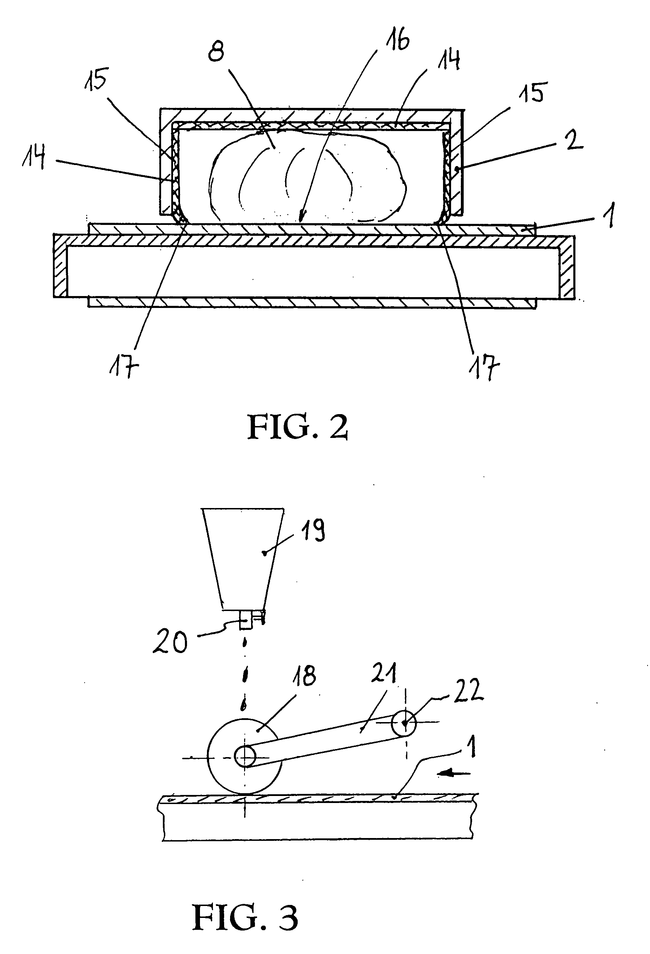

Damit auch weiche und klebrige Teige problemlos rundgewirkt werden können, ist der Wirkkanal 2, wie dies in Figur 2 ersichtlich ist, an den Innenflächen mit einem teigabstoßenden Material 14 überzogen. Sehr gute Versuchsergebnisse wurden mit einem Teflonmaterial erzielt, jedoch kann auch ein anderer Kunststoff oder Filz Verwendung finden, je nachdem welche Konsistenz die verwendeten Teige haben.

Der Wirkkanal 2 bildet eine nach unten offene U-förmige Rinne, deren Seitenwandungen mittels elastischer, dünnwandiger Kunststoffstreifen 15 ausgekleidet sind. Im unteren Bereich werden diese Kunststoffstreifen 15 leicht nach innen gebogen, so dass sie elastisch gegen die Oberfläche 16 des Transportbandes 1 drücken und dort als Teigabstreifer wirken.

Der Wirkkanal 2 führt durch die Exzenterbewegung einen seitlichen Hub aus, der so groß ist, dass die als Teigabstreifer wirkenden Kunststoffstreifen 15 mit ihren unteren Rändern 17 die gesamte Oberfläche 16 des Wirkkanals 2 überstreifen. Gelangt das Teigstück 8 seitlich an einen der Kunststoffstreifen 15, so wird dadurch der zugehörige Rand 17 vom Teigstück 8 gegen die Oberfläche 16 gedrückt, wodurch die Abstreiffunktion im Bereich des Randes 17 erhöht wird.

Durch die geringen Baumaße der Maschine ist sie gut geeignet, um direkt auf dem Auslaufband einer Teig-Abwiegeeinrichtung montiert zu werden. Das Transportband 1 ist dann das Auslaufband der Teig-Abwiegeeinrichtung. Die von der Teig-Abwiegeeinrichtung portionierten Teigstücke können somit sofort auf dem ohnehin vorhandenen Auslaufband rundgewirkt werden.

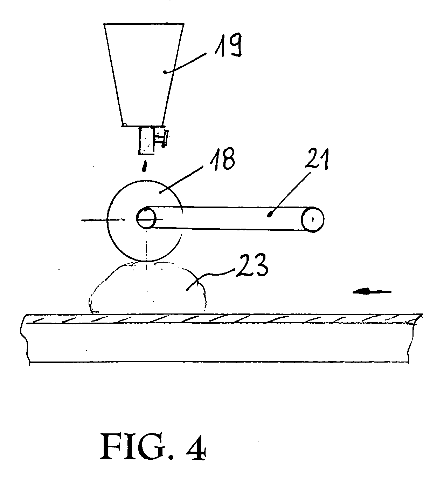

Die Figuren 3 und 4 zeigen eine Beölungseinrichtung für überkritische Teige mit sehr hohen Wasseranteilen. Vor dem Fangtrichter 9 (Figur 1) ist eine Walze 18 aus saugfähigem Material installiert. Die Walze 18 liegt zunächst mit ihrem Eigengewicht auf dem Transportband 1 auf (Figur 3). Über der Walze 18 ist ein Ölbehälter 19 angeordnet, der über ein Dosierventil 20 dosiert Öltropfen in einer einstellbaren Meng auf die Walze 18 tropft. Über einen Gelenkarm 21 ist die Walze 18 um die Gelenkachse 22 verschwenkbar. Beim Durchlauf eines Teigstücks 23 (Figur 4) wird die Walze 18 vom Teigstück 23 angehoben, wobei dieses von der Walze 18 beölt wird. Von der Walze werden somit die Oberfläche des Transportbandes 1 und das Teigstück 23 beölt. Das beölte Teigstück 23 überträgt den Ölfilm auf die Innenflachen im Wirkkanal 2 und auf die Arbeitsflächen, wodurch eine optimale Antihaftwirkung erzielt wird.

## Patentansprüche

1. Maschine zum Rundwirken von Teigstücken, **dadurch gekennzeichnet, dass** über einem Transportband (1) ein in Transportrichtung des Transportbandes ausgerichteter Wirkkanal (2) angeordnet ist, dessen zum Transportband (1) weisende Längsseite offen ist und an ihren seitlichen Rändern (17) gleitend auf dem Transportband (1) anliegt, und dass eine Antriebseinrichtung (3) den Wirkkanal (2) quer zur Transportrichtung des Transportbandes (1) periodisch auslenkt.

2. Maschine nach Anspruch 1, **dadurch gekennzeichnet, dass** die Antriebseinrichtung wenigstens einen Exzenterantrieb (4, 5) antreibt.

3. Maschine nach einem der Ansprüche 1 oder 2, **dadurch gekennzeichnet, dass** die Antriebseinrichtung (3) den Wirkkanal (2) kreisförmig auslenkt.

4. Maschine nach einem der vorhergehenden Ansprüche, **dadurch gekennzeichnet, dass** am Wirkkanal (2) im Längsabstand zwei Exzenterantriebe (4, 5) angreifen, die die Antriebseinrichtung (3) winkelsynchron antreibt.

5. Maschine nach einem der vorhergehenden Ansprüche, **dadurch gekennzeichnet, dass** das Transportband (1) eine glatte Oberfläche (16) hat.

6. Maschine nach einem der vorhergehenden Ansprüche, **dadurch gekennzeichnet, dass** an den die offene Längsseite des Wirkkanals (2) begrenzenden Seitenrändern Teigabstreifer angeordnet sind, die gleitend auf der Oberfläche (16) des Transportbandes (1) anliegen.

7. Maschine nach Anspruch 6, **dadurch gekennzeichnet, dass** die Teigabstreifer gleitende Ränder (17) haben, die leicht nach innen gebogen am Transportband (1) elastisch anliegen.

8. Maschine nach einem der Ansprüche 6 oder 7, **dadurch gekennzeichnet, dass** die Teigabstreifer aus einem teigabweisenden elastischen Kunststoffmaterial bestehen und vorzugsweise als dünnwandige Kunststoffstreifen ausgebildet sind.

9. Maschine nach einem der vorhergehenden Ansprüche, **dadurch gekennzeichnet, dass** die gesamten Innenflächen des Wirkkanals (2) mit teigabweisendem Material (14) abgedeckt sind.

10. Maschine nach einem der vorhergehenden Ansprüche, **dadurch gekennzeichnet, dass** die periodische Querauslenkung des Wirkkanals (2) einen so großen Seitenhub hat, dass an den seitlichen Rändern (17) des Wirkkanals angebrachte Teigabstreifer die unter dem Wirkkanal (2) mit Teig in Berührung kommende Oberfläche des Transportbandes (1) vollständig abstreifen.

11. Maschine nach einem der vorhergehenden Ansprüche, **dadurch gekennzeichnet, dass** der Wirkkanal (2) einen u-förmigen Querschnitt hat, und dass sich der Wirkkanal (2) von der für die Teigzufuhr vorgesehenen Öffnung trichterförmig verjüngt und sich zur Teigauslassöffnung hin wieder aufweitet.

12. Maschine nach einem der vorhergehenden Ansprüche, **dadurch gekennzeichnet, dass** das Transportband (1) das Auslaufband einer Teig-Abwiegeeinrichtung ist.

13. Maschine nach einem der vorhergehenden Ansprüche, **dadurch gekennzeichnet, dass** eine Walze (18) auf dem Transportband (1) über einen Gelenkarm (21) um eine Gelenkachse (22) verschwenkbar aufliegt, und dass ein Dosierventil (20) dosiert Öltropfen in einer einstellbaren Meng auf die Walze (18) aufbringt.

14. Verfahren zum Rundwirken von Teigstücken, **dadurch gekennzeichnet, dass** das Teigstück (8) auf ein Transportband (1) abgelegt und einer Wirkeinrichtung zugeführt wird, dass die Wirkeinrichtung mit einer der Transportbewegung des Transportbandes (1) überlagerten Schwenk- oder Kreisbewegung an dem Teigstück (8) angreift und dieses dabei rund formt.
